# EUROPEAN PATENT APPLICATION

(11) **EP 4 661 542 A1**
(43) Date of publication of application: **10.12.2025**
(21) Application number: 23922355.5
(22) Date of filing: 30.10.2023
(51) Int. Cl.: H04W 72/0446

(54) **COMMUNICATION METHOD, AND APPARATUS**

(30) Priority: 17.02.2023 CN 202310161971
(71) Applicant: Huawei Technologies Co., Ltd., Shenzhen, Guangdong 518129 (CN)
(72) Inventor: LI, Jun, Shenzhen, Guangdong 518129 (CN); JIAO, Shurong, Shenzhen, Guangdong 518129 (CN); HUA, Meng, Shenzhen, Guangdong 518129 (CN)
(74) Representative: Goddar, Heinz J.
(86) International application number: PCT/CN2023/127624
(87) International publication number: WO 2024/169239

(57) **Abstract**

A communication method and apparatus are provided. The method includes: A terminal device receives first indication information and second indication information that are from a network device. The first indication information indicates the terminal device to separately send first uplink information in a first time unit and a second time unit, the first time unit is used only for uplink transmission, and the second time unit is used for uplink transmission and downlink transmission. The second indication information indicates the terminal device whether to maintain power consistency and phase continuity between a first physical uplink channel and a second physical uplink channel. The first physical uplink channel carries the first uplink information in the first time unit, and the second physical uplink channel carries the first uplink information in the second time unit. In this way, the terminal device does not need to maintain the power consistency or the phase continuity between the first physical uplink channel and the second physical uplink channel when the network device receives the first physical uplink channel and the second physical uplink channel through different antennas, thereby improving repeated transmission performance.

## Description

### CROSS-REFERENCE TO RELATED APPLICATIONS

This application claims priority to Chinese Patent Application No. 202310161971.3, filed with the China National Intellectual Property Administration on February 17, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

To improve reliability of uplink transmission, a terminal device may repeatedly transmit same uplink information in a plurality of time units. The uplink information may be carried on a physical uplink shared channel (physical uplink shared channel, PUSCH) and/or a physical uplink control channel (physical uplink control channel, PUCCH). For example, the terminal device may transmit a same PUSCH in each of a plurality of consecutive slots.

How to improve repeated transmission performance is a problem that needs to be resolved in this application.

### SUMMARY

This application provides a communication method and apparatus, to improve repeated transmission performance.

According to a first aspect, an embodiment of this application provides a communication method. The method may be applied to a terminal device or a chip in the terminal device. The following uses an example in which the method is applied to the terminal device for description. The method includes: The terminal device receives first indication information and second indication information that are from a network device. The first indication information indicates the terminal device to separately send first uplink information in a first time unit and a second time unit, the first time unit is a time unit used only for uplink transmission, and the second time unit is a time unit capable of being used for uplink transmission and downlink transmission. The second indication information indicates the terminal device whether to maintain power consistency and phase continuity between a first physical uplink channel and a second physical uplink channel, the first physical uplink channel is a channel that is in the first time unit and that is used to carry the first uplink information, and the second physical uplink channel is a channel that is in the second time unit and that is used to carry the first uplink information. Then, the terminal device may send the first physical uplink channel in the first time unit and send the second physical uplink channel in the second time unit based on the first indication information and the second indication information.

According to the method, the terminal device may determine, based on an indication of the network device, whether to maintain the power consistency and the phase continuity between the first physical uplink channel and the second physical uplink channel, so that the terminal device does not need to maintain the power consistency or the phase continuity between the first physical uplink channel and the second physical uplink channel when the network device receives the first physical uplink channel and the second physical uplink channel through different antennas. In this way, the terminal device may adjust transmit power as required, thereby improving repeated transmission performance.

In a possible design, before sending the first physical uplink channel in the first time unit and sending the second physical uplink channel in the second time unit, if the second indication information indicates the terminal device not to maintain the power consistency or the phase continuity between the first physical uplink channel and the second physical uplink channel, the terminal device may determine that the power consistency and the phase continuity do not need to be maintained between the first physical uplink channel and the second physical uplink channel. In this design, the terminal device determines, based on the indication of the network device, that the power consistency and the phase continuity do not need to be maintained between the first physical uplink channel and the second physical uplink channel. In this way, the terminal device does not need to maintain the power consistency or the phase continuity between the first physical uplink channel and the second physical uplink channel when the network device receives the first physical uplink channel and the second physical uplink channel through different antennas, thereby improving repeated transmission performance.

In a possible design, before sending the first physical uplink channel in the first time unit and sending the second physical uplink channel in the second time unit, if the second indication information indicates the terminal device to maintain the power consistency and the phase continuity between the first physical uplink channel and the second physical uplink channel, and a bandwidth of the first physical uplink channel is different from a bandwidth of the second physical uplink channel, the terminal device may determine that the power consistency and the phase continuity do not need to be maintained between the first physical uplink channel and the second physical uplink channel. When the bandwidth of the first physical uplink channel is different from the bandwidth of the second physical uplink channel, the transmit power of the terminal device may also need to be changed. Therefore, in this design, when the bandwidth of the first physical uplink channel is different from the bandwidth of the second physical uplink channel, the terminal device determines that the power consistency and the phase continuity do not need to be maintained between the first physical uplink channel and the second physical uplink channel, so that the transmit power can be adjusted as required, thereby improving uplink transmission performance.

In a possible design, the terminal device may receive, from the network device, DCI, an RRC message, or a MAC CE that includes the second indication information. In this design, the terminal device may flexibly receive the second indication information from the network device.

In a possible design, the second indication information includes information indicating at least one time period. When the first time unit and the second time unit belong to a same time period in the at least one time period, the second indication information indicates the terminal device to maintain the power consistency and the phase continuity between the first physical uplink channel and the second physical uplink channel. When the first time unit and the second time unit do not belong to a same time period in the at least one time period, the second indication information indicates the terminal device not to maintain the power consistency or the phase continuity between the first physical uplink channel and the second physical uplink channel. In this design, the network device may indirectly indicate, by using the at least one time period, the terminal device whether to maintain the power consistency and the phase continuity between the first physical uplink channel and the second physical uplink channel. In this way, the network device does not need to send indication information for each group of first time units and second time units, to reduce signaling overheads and save transmission resources.

In a possible design, the first time unit includes an uplink time unit and/or a flexible time unit, and the second time unit includes a full-duplex time unit; the first time unit includes an uplink time unit, and the second time unit includes a full-duplex time unit and a flexible time unit; or the first time unit includes an uplink time unit, and the second time unit includes a flexible time unit. This design provides a plurality of implementations of the first time unit and the second time unit, and is applicable to a plurality of application scenarios. This broadens an application scope.

According to a second aspect, an embodiment of this application provides a communication method. The method may be applied to a network device or a chip in the network device. The following uses an example in which the method is applied to the network device for description. The method includes: The network device sends first indication information and second indication information to a terminal device. The first indication information indicates the terminal device to separately send first uplink information in a first time unit and a second time unit, the first time unit is a time unit used only for uplink transmission, and the second time unit is a time unit capable of being used for uplink transmission and downlink transmission. The second indication information indicates the terminal device whether to maintain power consistency and phase continuity between a first physical uplink channel and a second physical uplink channel, the first physical uplink channel is a channel that is in the first time unit and that is used to carry the first uplink information, and the second physical uplink channel is a channel that is in the second time unit and that is used to carry the first uplink information. Then, the network device may receive the first physical uplink channel in the first time unit and receive the second physical uplink channel in the second time unit.

According to the method, the network device may indicate the terminal device whether to maintain the power consistency and the phase continuity between the first physical uplink channel and the second physical uplink channel, so that the terminal device does not need to maintain the power consistency or the phase continuity between the first physical uplink channel and the second physical uplink channel when the network device receives the first physical uplink channel and the second physical uplink channel through different antennas. In this way, the terminal device may adjust transmit power as required, thereby improving repeated transmission performance.

In a possible design, when the second indication information indicates the terminal device not to maintain the power consistency or the phase continuity between the first physical uplink channel and the second physical uplink channel, the network device may determine that joint processing does not need to be performed on a DMRS for the first physical uplink channel and the second physical uplink channel. According to this design, the network device does not perform unnecessary joint processing on the DMRS for the first physical uplink channel and the second physical uplink channel, thereby reducing channel estimation complexity.

In a possible design, when the second indication information indicates the terminal device to maintain the power consistency and the phase continuity between the first physical uplink channel and the second physical uplink channel, and a bandwidth of the first physical uplink channel is different from a bandwidth of the second physical uplink channel, the network device may determine that joint processing does not need to be performed on the DMRS for the first physical uplink channel and the second physical uplink channel. When the bandwidth of the first physical uplink channel is different from the bandwidth of the second physical uplink channel, it is more difficult for the network device to perform joint processing, and complexity is increased. In this design, when the bandwidth of the first physical uplink channel is different from the bandwidth of the second physical uplink channel, the network device determines not to perform joint processing on the DMRS for the first physical uplink channel and the second physical uplink channel, so that channel estimation complexity can be reduced.

In a possible design, the network device may send, to the terminal device, DCI, an RRC message, or a MAC CE that includes the second indication information. In this design, the network device may flexibly send the second indication information to the terminal device.

In a possible design, the second indication information includes information indicating at least one time period. When the first time unit and the second time unit belong to a same time period in the at least one time period, the second indication information indicates the terminal device to maintain the power consistency and the phase continuity between the first physical uplink channel and the second physical uplink channel. When the first time unit and the second time unit do not belong to a same time period in the at least one time period, the second indication information indicates the terminal device not to maintain the power consistency or the phase continuity between the first physical uplink channel and the second physical uplink channel. In this design, the network device may indirectly indicate, by using the at least one time period, the terminal device whether to maintain the power consistency and the phase continuity between the first physical uplink channel and the second physical uplink channel. In this way, the network device does not need to send indication information for each group of first time units and second time units, to reduce signaling overheads and save transmission resources.

In a possible design, the first time unit includes an uplink time unit and/or a flexible time unit, and the second time unit includes a full-duplex time unit; the first time unit includes an uplink time unit, and the second time unit includes a full-duplex time unit and a flexible time unit; or the first time unit includes an uplink time unit, and the second time unit includes a flexible time unit. This design provides a plurality of implementations of the first time unit and the second time unit, and is applicable to a plurality of application scenarios. This broadens an application scope.

According to a third aspect, an embodiment of this application provides a communication method. The method may be applied to a terminal device or a chip in the terminal device. The following uses an example in which the method is applied to the terminal device for description. The method includes: The terminal device receives first indication information from a network device, where the first indication information indicates the terminal device to separately send first uplink information in a first time unit and a second time unit. The first time unit is a time unit used only for uplink transmission, and the second time unit is a time unit capable of being used for uplink transmission and downlink transmission. Then, the terminal device may determine that power consistency and phase continuity do not need to be maintained between the first physical uplink channel and the second physical uplink channel. The first physical uplink channel is a channel that is in the first time unit and that is used to carry the first uplink information, and the second physical uplink channel is a channel that is in the second time unit and that is used to carry the first uplink information.

According to the method, if the terminal device separately sends the first uplink information in the first time unit used only for uplink transmission and the second time unit capable of being used for uplink transmission and downlink transmission, it may be considered by default that the power consistency and the phase continuity do not need to be maintained between the first physical uplink channel and the second physical uplink channel. In this way, the terminal device may adjust transmit power as required, thereby improving repeated transmission performance.

In a possible design, the first time unit includes an uplink time unit and/or a flexible time unit, and the second time unit includes a full-duplex time unit; the first time unit includes an uplink time unit, and the second time unit includes a full-duplex time unit and a flexible time unit; or the first time unit includes an uplink time unit, and the second time unit includes a flexible time unit. This design provides a plurality of implementations of the first time unit and the second time unit, and is applicable to a plurality of application scenarios. This broadens an application scope.

According to a fourth aspect, an embodiment of this application provides a communication method. The method may be applied to a network device or a chip in the network device. The following uses an example in which the method is applied to the network device for description. The method includes: The network device sends first indication information to a terminal device, where the first indication information indicates the terminal device to separately send first uplink information in a first time unit and a second time unit. The first time unit is a time unit used for uplink transmission, and the second time unit is a time unit capable of being used for uplink transmission and downlink transmission. The network device may determine that joint processing does not need to be performed on a DMRS for a first physical uplink channel and a second physical uplink channel, where the first physical uplink channel is a channel that is in the first time unit and that is used to carry the first uplink information, and the second physical uplink channel is a channel that is in the second time unit and that is used to carry the first uplink information.

According to the method, if the terminal device separately sends the first uplink information in the first time unit used only for uplink transmission and the second time unit capable of being used for uplink transmission and downlink transmission, it may be considered by default that the network device does not need to perform joint processing on the DMRS for the first physical uplink channel and the second physical uplink channel, so that channel estimation complexity can be reduced.

In a possible design, the first time unit includes an uplink time unit and/or a flexible time unit, and the second time unit includes a full-duplex time unit; the first time unit includes an uplink time unit, and the second time unit includes a full-duplex time unit and a flexible time unit; or the first time unit includes an uplink time unit, and the second time unit includes a flexible time unit. This design provides a plurality of implementations of the first time unit and the second time unit, and is applicable to a plurality of application scenarios. This broadens an application scope.

According to a fifth aspect, an embodiment of this application provides a communication apparatus, including units configured to perform steps in any one of the foregoing aspects.

According to a sixth aspect, an embodiment of this application provides a communication apparatus, including at least one processing element and at least one storage element. The at least one storage element is configured to store a program and data, and the at least one processing element is configured to read and execute the program and the data that are stored in the storage element, so that the method according to any one of the foregoing aspects of this application is implemented.

According to a seventh aspect, an embodiment of this application provides a communication system, including a terminal device configured to perform the method according to the first aspect and a network device configured to perform the method according to the second aspect.

According to an eighth aspect, an embodiment of this application provides a communication system, including a terminal device configured to perform the method according to the third aspect, and a network device configured to perform the method according to the fourth aspect.

According to a ninth aspect, an embodiment of this application further provides a computer program. When the computer program is run on a computer, the computer is enabled to perform the method according to any one of the foregoing aspects.

According to a tenth aspect, an embodiment of this application further provides a computer-readable storage medium. The computer-readable storage medium stores a computer program. When the computer program is executed by a computer, the computer is enabled to perform the method according to any one of the foregoing aspects.

According to an eleventh aspect, an embodiment of this application further provides a chip. The chip is configured to read a computer program stored in a memory, to perform the method according to any one of the foregoing aspects.

According to a twelfth aspect, an embodiment of this application further provides a chip system. The chip system includes a processor, configured to support a computer apparatus in implementing the method according to any one of the foregoing aspects. In a possible design, the chip system further includes a memory, and the memory is configured to store a program and data that are necessary for the computer apparatus. The chip system may include a chip, or may include a chip and another discrete component.

For technical effects that can be achieved in any one of the fifth aspect to the twelfth aspect, refer to the descriptions of the technical effects that can be achieved in any possible design in any one of the first aspect to the fourth aspect. Repeated parts are not described.

### BRIEF DESCRIPTION OF DRAWINGS

FIG. 1 is a diagram of an architecture of a communication system according to an embodiment of this application;
FIG. 2 is a diagram of duplex modes according to an embodiment of this application;
FIG. 3A is a diagram of an antenna of a network device according to an embodiment of this application;
FIG. 3B is a diagram of an antenna of another network device according to an embodiment of this application;
FIG. 3C is a diagram of an antenna of still another network device according to an embodiment of this application;
FIG. 4 is a diagram of a first type of repeated transmission according to an embodiment of this application;
FIG. 5 is a diagram of a second type of repeated transmission according to an embodiment of this application;
FIG. 6 is a flowchart of a communication method according to an embodiment of this application;
FIG. 7A is a diagram of a third type of repeated transmission according to an embodiment of this application;
FIG. 7B is a diagram of a fourth type of repeated transmission according to an embodiment of this application;
FIG. 7C is a diagram of a fifth type of repeated transmission according to an embodiment of this application;
FIG. 7D is a diagram of a sixth type of repeated transmission according to an embodiment of this application;
FIG. 7E is a diagram of a seventh type of repeated transmission according to an embodiment of this application;
FIG. 7F is a diagram of an eighth type of repeated transmission according to an embodiment of this application;
FIG. 8 is a diagram of a pattern indicating at least one time period according to an embodiment of this application;
FIG. 9 is a flowchart of another communication method according to an embodiment of this application;
FIG. 10 is a diagram of a structure of a communication apparatus according to an embodiment of this application; and
FIG. 11 is a diagram of a structure of another communication apparatus according to an embodiment of this application.

### DESCRIPTION OF EMBODIMENTS

The technical solutions in embodiments of this application may be applied to various communication systems, for example, a 5th generation (5th generation, 5G) mobile communication system and another communication system, for example, a 6th generation (6th generation, 6G) mobile communication system, or may be applied to a satellite communication system, a device-to-device (device-to-device, D2D) network, a machine-to-machine (machine-to-machine, M2M) network, an internet of things (internet of things, IoT) network, or another network.

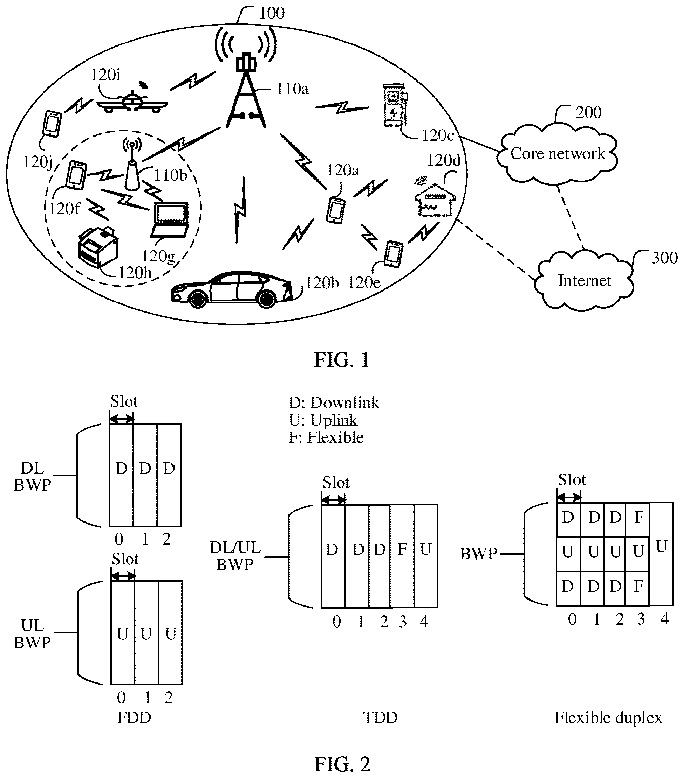

An architecture of the communication system to which embodiments of this application are applied may be shown in FIG. 1. The communication system includes a radio access network 100 and a core network 200. Optionally, the communication system may further include an internet 300. The radio access network 100 may include at least one network device, for example, 110a and 110b in FIG. 1, and may further include at least one terminal device, for example, 120a to 120j in FIG. 1. The terminal device may be connected to the network device in a wireless manner, and the network device may be connected to the core network in a wireless or wired manner. A core network device and the network device may be different physical devices independent of each other, or functions of the core network device and logical functions of the network device may be integrated into a same physical device, or some of functions of the core network device and some of functions of the network device may be integrated into one physical device. Terminal devices may be connected to each other in a wired or wireless manner, and network devices may be connected to each other in a wired or wireless manner. FIG. 1 is merely a diagram. The communication system may further include another device, for example, may further include a wireless relay device and a wireless backhaul device, which are not shown in FIG. 1.

The network device may also be referred to as a radio access network device, and may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6G mobile communication system, a base station in a future mobile communication system, an access node in a wireless fidelity (wireless fidelity, Wi-Fi) system, or the like; or may be a module or a unit that completes some functions of a base station, for example, may be a central unit (central unit, CU), or may be a distributed unit (distributed unit, DU). The CU herein completes functions of a radio resource control protocol layer and a packet data convergence protocol (packet data convergence protocol, PDCP) layer of the base station, and may further complete a function of a service data adaptation protocol (service data adaptation protocol, SDAP) layer. The DU completes functions of a radio link control layer and a media access control (media access control, MAC) layer of the base station, and may further complete some or all functions of a physical layer. For specific descriptions of the foregoing protocol layers, refer to technical specifications related to the 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

The terminal device is a device that has a wireless transceiver function, and may send a signal to the network device, or receive a signal from the network device. The terminal device may also be referred to as a terminal, user equipment (user equipment, UE), a mobile station (mobile station, MS), a mobile terminal, or the like. The terminal device may be widely used in various scenarios, for example, D2D, vehicle-to-everything (vehicle-to-everything, V2X) communication, machine-type communication (machine-type communication, MTC), an IoT, virtual reality, augmented reality, industrial control, self-driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal device are not limited in embodiments of this application.

The network device and the terminal device may be at fixed locations or may be movable. The network device and the terminal device may be deployed on land, including an indoor or outdoor device, a handheld device, or a vehicle-mounted device; or may be deployed on a water surface; or may be deployed on a plane, a balloon, or an artificial satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 through 120i, the terminal device 120i is a network device. However, for the network device 110a, 120i is a terminal device. In other words, 110a and 120i communicate with each other according to a radio air interface protocol. Certainly, 110a and 120i may alternatively communicate with each other according to an interface protocol between network devices. In this case, for 110a, 120i is also a network device. Therefore, the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

Communication between a network device and a terminal device, between network devices, or between terminal devices may be performed by using a licensed spectrum, an unlicensed spectrum, or both a licensed spectrum and an unlicensed spectrum; or may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, a function of the network device may be performed by the network device, or may be performed by a module (for example, a chip) in the network device, or may be performed by a control subsystem including the function of the network device. The control subsystem including the function of the network device may be a control center in the foregoing application scenarios such as the smart grid, the industrial control, the smart transportation, and the smart city. A function of the terminal device may be performed by the terminal device, or may be performed by a module (for example, a chip or a modem) in the terminal device, or may be performed by an apparatus including the function of the terminal device. An example in which the function of the network device is performed by the network device and the function of the terminal device is performed by the terminal device is used below for description.

For ease of understanding by a person skilled in the art, the following explains and describes some terms in embodiments of this application.

### 1. Duplex mode

Currently, duplex modes in new radio (new radio, NR) include frequency division duplex (frequency division duplex, FDD) and time division duplex (time division duplex, TDD).

A left figure of FIG. 2 shows an example of FDD. As shown in the left figure of FIG. 2, a downlink (downlink, DL) BWP in a slot 0 may be used for downlink transmission, and an uplink (uplink, UL) BWP in the slot 0 may be used for uplink transmission.

A middle figure of FIG. 2 shows an example of TDD. As shown in the middle figure of FIG. 2, a slot 0 can be used only for downlink transmission, a slot 4 can be used only for uplink transmission, a slot 3 is a flexible slot, and the slot 3 can be used for uplink transmission or downlink transmission, but cannot be used for uplink and downlink transmission at the same time.

Compared with FDD, TDD occupies a smaller quantity of frequency domain resources. However, in TDD, uplink and downlink transmission cannot be performed in all slots at the same time, resulting in an increase in an uplink transmission delay. To resolve a TDD delay problem, flexible duplex is being discussed in a standard. Flexible duplex may also be referred to as complementary TDD (Complementary TDD, C-TDD), full duplex (full duplex), subband full duplex (subband full duplex, SBFD), or the like. A core idea of flexible duplex is that uplink and downlink transmission may be performed in a time unit (for example, a symbol or a slot) at the same time.

A right figure of FIG. 2 shows an example of flexible duplex. As shown in the right figure of FIG. 2, in a slot (for example, a slot 0), there is a segment of frequency domain resource in a BWP, and uplink transmission may be performed on the frequency domain resource. In this way, uplink transmission may be performed in the slot 0, to reduce an uplink transmission delay. In addition, downlink transmission may be further performed in the slot 0.

In flexible duplex, the network device may be a full-duplex device. For example, the network device may perform uplink and downlink transmission in the slot 0 at the same time. In some examples, the terminal device may be a full-duplex device. For example, the terminal device may perform uplink and downlink transmission in the slot 0 at the same time. In some other examples, the terminal device may be a half-duplex device. For example, the terminal device performs only uplink transmission or only downlink transmission in the slot 0. Full duplex may be understood as performing uplink and downlink transmission at the same time, and half duplex may be understood as only uplink or downlink transmission can be performed at a moment (for example, in a symbol or a slot).

Compared with TDD, flexible duplex has more uplink resources, to improve uplink coverage and reduce an uplink transmission delay.

### 2. Antenna of the network device

The following separately describes antennas of the network device whose duplex modes are TDD and flexible duplex.
(1) The duplex mode is TDD.

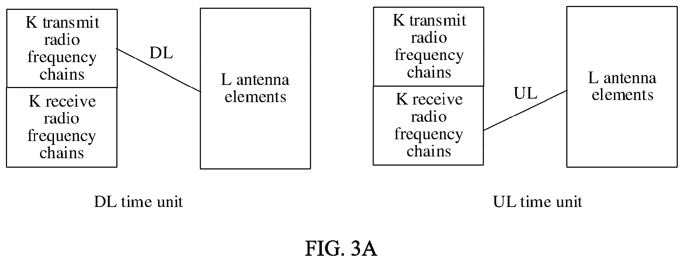

In a conventional TDD system, the antenna of the network device may include L antenna elements (antenna element), where L is a positive integer. As shown in FIG. 3A, in a DL time unit (for example, a DL slot or a DL symbol), the L antenna elements may be connected to K transmit radio frequency chains (chains) for downlink transmission, where K is a positive integer. In a UL time unit (for example, a UL slot or a UL symbol), the L antenna elements may be connected to K receive radio frequency chains for uplink transmission. The network device uses a same antenna to perform uplink transmission and downlink transmission, so that channel continuity can be ensured and reciprocity between uplink and downlink channels can be maintained. The channel continuity may be understood as follows: The downlink channel between different DL time units is continuous, or the uplink channel between different UL time units is continuous. The reciprocity between the uplink and downlink channels may be understood as follows: The downlink channel and the uplink channel have a same channel characteristic, and the network device may obtain information about the downlink channel by measuring the uplink channel.

(2) The duplex mode is flexible duplex.

In a flexible duplex system, to support the network device in performing uplink and downlink transmission at the same time, the network device may include two groups of antenna elements, and each group of antenna elements includes L antenna elements. When uplink and downlink transmission are performed at the same time, L antenna elements in a group 1 may be used for downlink transmission, and L antenna elements in a group 2 may be used for uplink transmission.

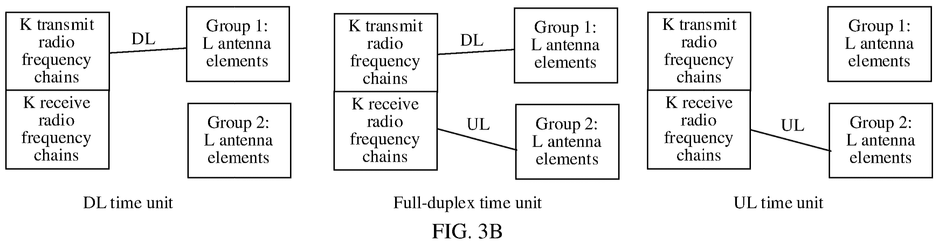

In an example, as shown in FIG. 3B, in a DL time unit, L antenna elements in a group 1 may be connected to K transmit radio frequency chains for downlink transmission. In a full-duplex time unit, L antenna elements in a group 1 are connected to K transmit radio frequency chains for downlink transmission, and L antenna elements in a group 2 are connected to K receive radio frequency chains for uplink transmission. In a UL time unit, L antenna elements in a group 2 may be connected to K receive radio frequency chains for uplink transmission. In this example, a receive antenna of the network device in the full-duplex time unit is the same as a receive antenna of the network device in the uplink time unit, so that continuity between uplink channels can be ensured.

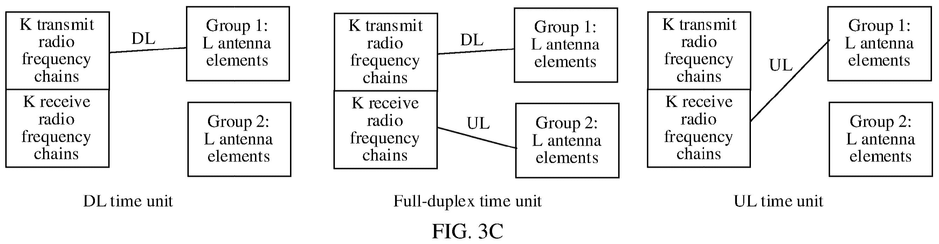

In another example, as shown in FIG. 3C, in a DL time unit, L antenna elements in a group 1 may be connected to K transmit radio frequency chains for downlink transmission. In a full-duplex time unit, L antenna elements in a group 1 are connected to K transmit radio frequency chains for downlink transmission, and L antenna elements in a group 2 are connected to K receive radio frequency chains for uplink transmission. In a UL time unit, L antenna elements in a group 1 may be connected to K receive radio frequency chains for uplink transmission. In this example, a receive antenna of the network device in the UL time unit is the same as a transmit antenna of the network device in the full-duplex time unit, so that reciprocity between uplink and downlink channels can be ensured.

3. In this application, repeated transmission means that the terminal device separately sends same uplink information in a plurality of time units. In other words, the terminal device repeatedly sends the same uplink information in the plurality of time units.

In an example, the terminal device sends complete uplink information in each of the plurality of time units. For example, the uplink information is information 1, and the terminal device sends, in a time unit 1, a physical uplink channel 1 that carries the information 1 and sends, in a time unit 2, a physical uplink channel 2 that carries the information 1. The network device may obtain the complete uplink information after receiving one of physical uplink channels, for example, the physical uplink channel 1 or the physical uplink channel 2.

In another example, each of the plurality of time units is used to send a part of the uplink information. For example, the uplink information is information 1, and the terminal device sends, in a time unit 1, a physical uplink channel 1 that carries a first part of the information 1 and sends, in a time unit 2, a physical uplink channel 2 that carries a second part of the information 1. For example, the information 1 is a transport block (Transport block, TB). After physical layer processing such as encoding, rate matching, and modulation is performed on the TB, some modulation symbols are mapped to the physical uplink channel 1, and the other modulation symbols are mapped to the physical uplink channel 2. This transmission mode may also be referred to as TB processing over multiple slots (TB processing over multiple slots, TBoMS). The network device can obtain the complete uplink information only after receiving the physical uplink channel 1 and the physical uplink channel 2.

A type of repeated transmission may also be referred to as a repetition type, and may include at least one of the following: a PUSCH repetition type A (PUSCH repetition A), a PUSCH repetition type B (PUSCH repetition B), a TBoMS type, and a PUCCH repetition type. In the PUSCH repetition type A, the PUSCH repetition type B, and the transport block processing over multiple slots type, the repeatedly sent uplink information is carried on a PUSCH. In the PUCCH repetition type, the repeatedly sent uplink information is carried on a PUCCH.

4. A time unit generally refers to a unit of time. For example, the time unit may be but is not limited to a radio frame, a subframe (subframe), a slot (slot), a symbol (symbol), or the like. The symbol may be a time domain symbol (for example, an orthogonal frequency division multiplexing (orthogonal frequency division multiplexing, OFDM) symbol) or the like.

In this application, an uplink time unit is used only for uplink transmission. For example, the uplink time unit may be an uplink slot or an uplink symbol. A downlink time unit is used only for downlink transmission. For example, the downlink time unit may be a downlink slot or a downlink symbol. A flexible time unit may be used for both uplink transmission and downlink transmission, but may not be used for performing uplink and downlink transmission at the same time. When the flexible time unit is used for uplink transmission, the flexible time unit is used only for uplink transmission. When the flexible time unit is used for downlink transmission, the flexible time unit is used only for downlink transmission. The flexible time unit is, for example, a flexible slot or a flexible symbol. A full-duplex time unit may be used for performing uplink transmission and downlink transmission at the same time. For example, in the full-duplex time unit, the network device may perform uplink transmission and downlink transmission at the same time. If uplink transmission and downlink transmission can also be performed at the same time in the flexible time unit, the flexible time unit may also be understood as a full-duplex time unit. The full-duplex time unit may also be referred to as an SBFD time unit. For example, the full-duplex time unit is a full-duplex slot or symbol.

5. A physical uplink channel is a physical channel used for uplink transmission. For example, the physical uplink channel may include a PUCCH and/or a PUSCH.

In embodiments of this application, unless otherwise specified, a quantity of nouns indicates "a singular noun or a plural noun", that is, "one or more". "At least one" means one or more, and "a plurality of" means two or more. A term "and/or" describes an association relationship between associated objects, and indicates that three relationships may exist. For example, A and/or B may indicate the following three cases: Only A exists, both A and B exist, and only B exists. "At least one of the following items (pieces)" or a similar expression thereof is any combination of these items (pieces), including a single item (piece) or any combination of a plurality of items (pieces).

In addition, it should be understood that in the descriptions of this application, terms such as "first" and "second" are merely used for distinguishing, and should not be understood as an indication or implication of relative importance or an indication or implication of a sequence.

In the conventional TDD system, to improve uplink coverage, when same uplink information is separately sent in a plurality of time units, the terminal device maintains power consistency and phase continuity between physical uplink channels that are used to carry the uplink information in different time units. The power consistency means that the terminal device sends, in different time units by using same transmit power, the physical uplink channels used to carry the uplink information. The phase continuity means that phases of the physical uplink channels that are used to carry the uplink information in different time units are continuous. In this way, the network device may perform joint processing based on a plurality of received physical uplink channels. For example, the network device may perform joint processing, for example, joint channel estimation, on a demodulation reference signal (demodulation reference signal, DMRS) based on the plurality of received physical uplink channels, so that uplink transmission performance can be improved.

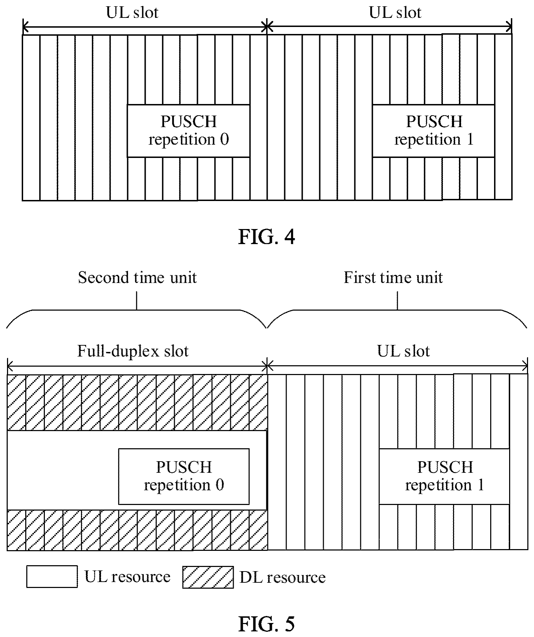

For example, a repetition type used when the terminal device separately sends the same uplink information in the plurality of time units is the PUSCH repetition type A. In this way, the terminal device may send same uplink information in a plurality of slots. The uplink information is information 1. As shown in FIG. 4, the terminal device may send a PUSCH repetition 0 in a 1^{st} UL slot and send a PUSCH repetition 1 in a 2^{nd} UL slot. Both the PUSCH repetition 0 and the PUSCH repetition 1 are PUSCHs that are used to carry the information 1. The terminal device maintains power consistency and phase continuity between the PUSCH repetition 0 and the PUSCH repetition 1. The network device may perform joint channel estimation on the PUSCH repetition 0 and the PUSCH repetition 1, to improve uplink transmission performance.

In the flexible duplex system, if the terminal device separately sends same uplink information in a full-duplex time unit and a UL time unit, when a receive antenna of the network device in the full-duplex time unit is different from a receive antenna of the network device in the UL time unit, the network device cannot perform joint channel estimation based on a channel received in the full-duplex time unit and a channel received in the UL time unit. For example, as shown in FIG. 5, the uplink information is information 1. The terminal device sends a PUSCH repetition 0 in a full-duplex slot and sends a PUSCH repetition 1 in a UL slot. Both the PUSCH repetition 0 and the PUSCH repetition 1 are PUSCHs that are used to carry the information 1. If the network device receives information through the antenna shown in FIG. 3C, a receive antenna of the network device in the full-duplex slot is different from a receive antenna of the network device in the UL slot. Consequently, channels between the PUSCH repetition 0 and the PUSCH repetition 1 are different, and the network device cannot perform joint channel estimation. In this case, if UE still maintains power consistency and phase continuity between the PUSCH repetition 0 and the PUSCH repetition 1, power and the like of uplink transmission cannot be adjusted as required, and repeated transmission performance is affected.

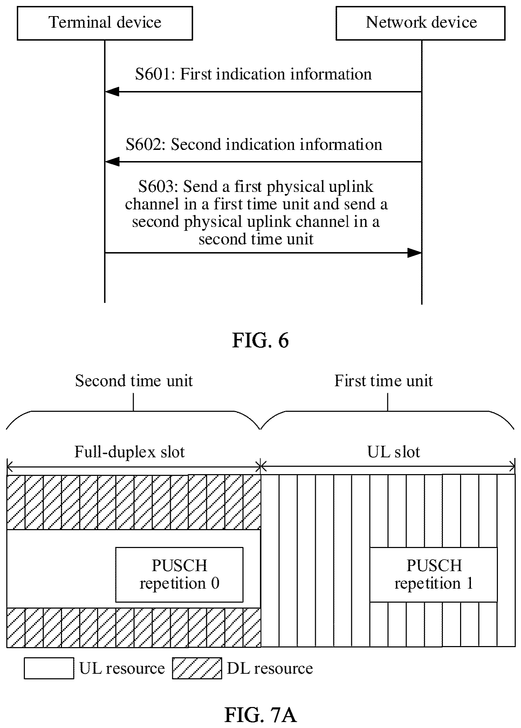

To improve the repeated transmission performance, an embodiment of this application provides a communication method. The method may be applied to the communication system shown in FIG. 1. The following specifically describes a procedure of the method with reference to a flowchart shown in FIG. 6.

S601: A network device sends first indication information to a terminal device. Correspondingly, the terminal device receives the first indication information from the network device.

The first indication information may indicate the terminal device to separately send first uplink information in a first time unit and a second time unit. In other words, the first indication information may indicate the terminal device to repeatedly transmit the first uplink information in the first time unit and the second time unit. A type of repeated transmission is described above. Details are not described herein again.

In this application, the first time unit is a time unit used only for uplink transmission, and the second time unit is a time unit capable of being used for uplink transmission and downlink transmission. In other words, the second time unit includes both a resource used for uplink transmission and a resource used for downlink transmission.

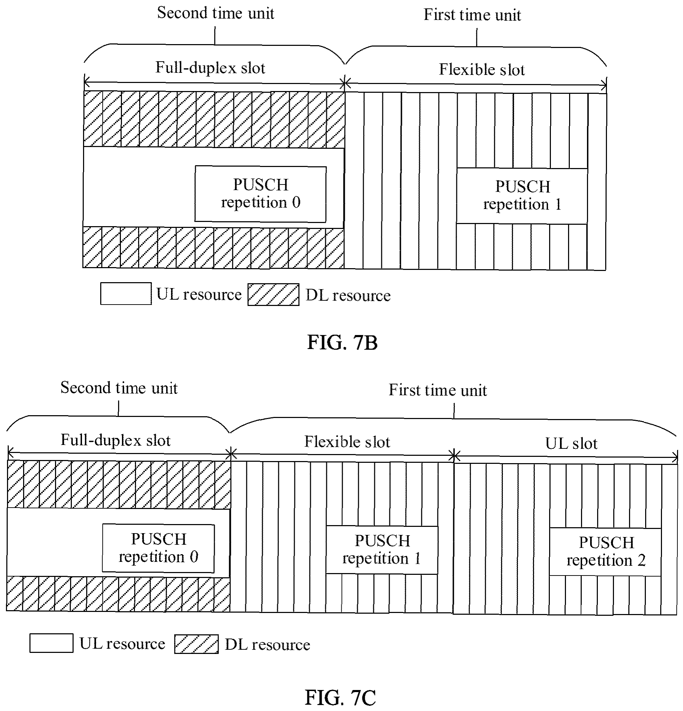

In an example, the first time unit includes an uplink time unit and/or a flexible time unit, and the second time unit includes a full-duplex time unit. For example, as shown in FIG. 7A, the first time unit includes a UL slot, and the second time unit includes a full-duplex slot. For another example, as shown in FIG. 7B, the first time unit includes a flexible slot, and the second time unit includes a full-duplex slot. For still another example, as shown in FIG. 7C, the first time unit includes a flexible slot and a UL slot, and the second time unit includes a full-duplex slot.

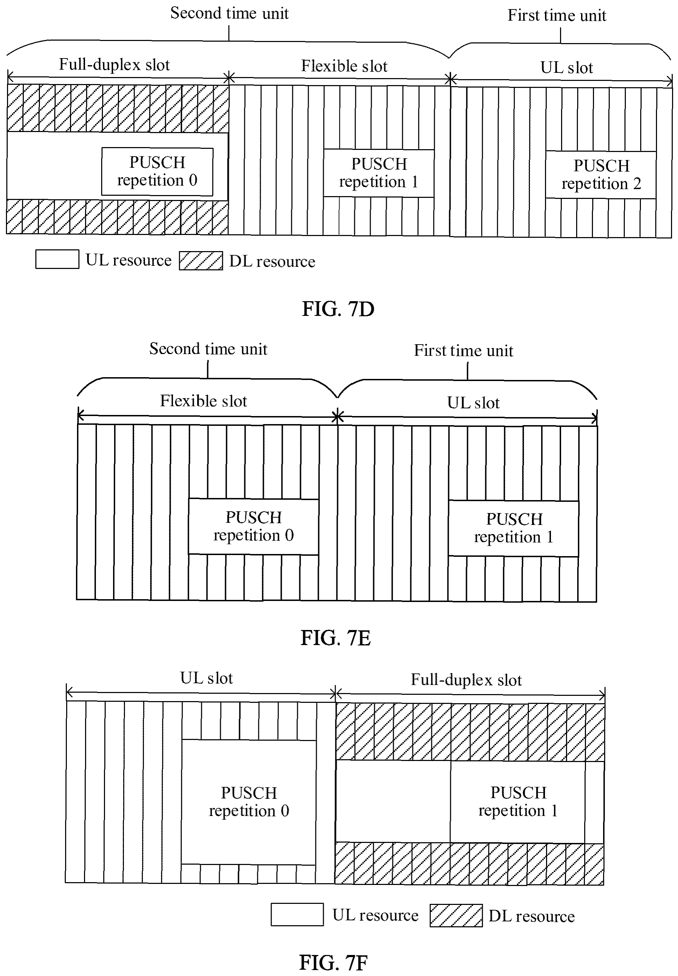

In another example, the first time unit includes an uplink time unit, and the second time unit includes a full-duplex time unit and a flexible time unit. For example, as shown in FIG. 7D, the first time unit includes a UL slot, and the second time unit includes a full-duplex slot and a flexible slot.

In still another example, the first time unit includes an uplink time unit, and the second time unit includes a flexible time unit. For example, as shown in FIG. 7E, the first time unit includes a UL slot, and the second time unit includes a flexible slot.

Optionally, the network device may send the first indication information to the terminal device in one of the following manners.

Manner 1: The first indication information is first downlink control information (downlink control information, DCI) or first radio resource control (radio resource control, RRC) configuration information. The network device sends the first DCI or the first RRC configuration information to the terminal device. The first DCI or the first RRC configuration information may indicate the terminal device to separately send the first uplink information in the first time unit and the second time unit.

Manner 2: The first indication information includes second DCI and second RRC configuration information. The network device first sends the second RRC configuration information to the terminal device, where the second RRC configuration information may indicate a set of quantities of repetitions. Then, the network device may send the second DCI to the terminal device, where the second DCI may indicate the terminal device to separately send the first uplink information in the first time unit and the second time unit. In other words, the second DCI indicates one quantity of repetitions from the set of quantities of repetitions configured by using the RRC.

S602: The network device sends second indication information to the terminal device. Correspondingly, the terminal device receives the second indication information from the network device.

The second indication information indicates the terminal device whether to maintain power consistency and phase continuity between a first physical uplink channel and a second physical uplink channel. The first physical uplink channel is a channel that is in the first time unit and that is used to carry the first uplink information, and the second physical uplink channel is a channel that is in the second time unit and that is used to carry the first uplink information. For example, as shown in FIG. 7A, FIG. 7B, or FIG. 7E, the first physical uplink channel is a PUSCH repetition 1, and the second physical uplink channel is a PUSCH repetition 0. For another example, as shown in FIG. 7C, the first physical uplink channel includes a PUSCH repetition 1 and/or a PUSCH repetition 2, and the second physical uplink channel is a PUSCH repetition 0. For still another example, as shown in FIG. 7D, the first physical uplink channel is a PUSCH repetition 2, and the second physical uplink channel includes a PUSCH repetition 0 and/or a PUSCH repetition 1. For yet another example, as shown in FIG. 7F, the first physical uplink channel is a PUSCH repetition 0, and the second physical uplink channel is a PUSCH repetition 1. It should be understood that the first physical uplink channel and the second physical uplink channel may be physical uplink channels respectively corresponding to two adjacent repetitions. For example, as shown in FIG. 7C, the second physical uplink channel is the PUSCH repetition 0, and the first physical uplink channel is the PUSCH repetition 1. As shown in FIG. 7D, the first physical uplink channel is the PUSCH repetition 2, and the second physical uplink channel is the PUSCH repetition 1.

In some possible manners, the second indication information may directly indicate the terminal device whether to maintain the power consistency and the phase continuity between the first physical uplink channel and the second physical uplink channel. For example, when a value of the second indication information is a first value (for example, 1), it indicates that the terminal device can maintain the power consistency and the phase continuity between the first physical uplink channel and the second physical uplink channel; or when a value of the second indication information is a second value (for example, 0), the terminal device may be indicated not to maintain the power consistency or the phase continuity between the first physical uplink channel and the second physical uplink channel.

In some other possible manners, the second indication information may indirectly indicate the terminal device whether to maintain the power consistency and the phase continuity between the first physical uplink channel and the second physical uplink channel. For example, the second indication information includes information indicating at least one time period. In each of the at least one time period, the network device may receive the uplink information through a same receive antenna. In this way, when the first time unit and the second time unit belong to a same time period in the at least one time period, the terminal device may maintain the power consistency and the phase continuity between the first physical uplink channel and the second physical uplink channel. Therefore, when the first time unit and the second time unit belong to the same time period in the at least one time period, the second indication information may indicate the terminal device to maintain the power consistency and the phase continuity between the first physical uplink channel and the second physical uplink channel; or when the first time unit and the second time unit do not belong to the same time period in the at least one time period, the second indication information may indicate the terminal device not to maintain the power consistency or the phase continuity between the first physical uplink channel and the second physical uplink channel.

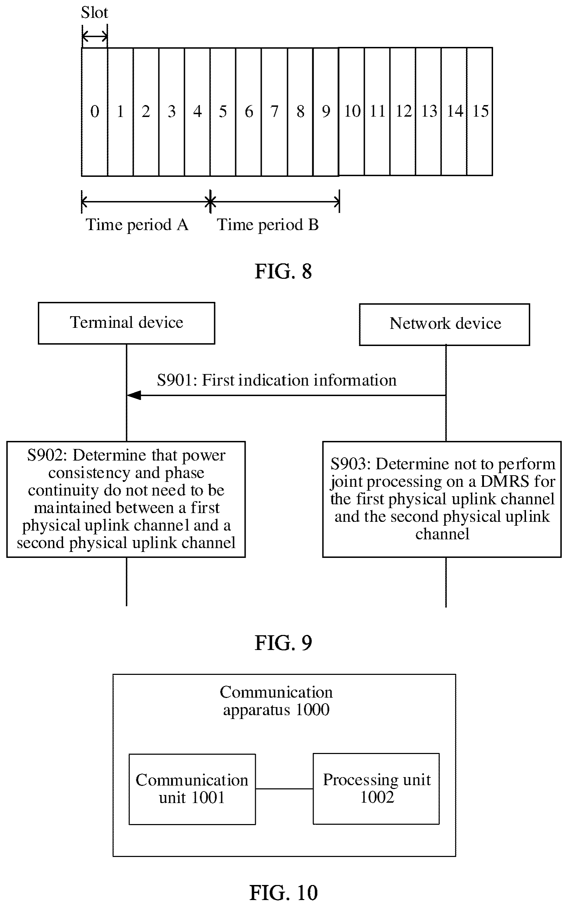

In an example, the information indicating the at least one time period may be a pattern (pattern) including the at least one time period. The pattern may be semi-statically configured by the network device for the terminal device. For example, the network device semi-statically configures a periodicity, or configures a periodicity and an offset for the terminal device. Duration of time periods in the at least one time period may be the same, or may be different. For example, the pattern is a pattern shown in FIG. 8. As shown in FIG. 8, duration of each of the at least one time period is five slots (which may be understood as a periodicity of five slots), and a start moment of a 1^{st} time period in the at least one time period is a slot 0 (which may be understood as an offset of 0). In this way, the slot 0 to a slot 4 belong to one time period (for example, a time period A), and a slot 5 to a slot 9 belong to another time period (for example, a time period B). If both the first time unit and the second time unit are in a same time period, for example, the time period A or the time period B, the terminal device may maintain the power consistency and the phase continuity between the first physical uplink channel and the second physical uplink channel. If the first time unit and the second time unit are not in a same time period, for example, the first time unit is in the time period A, and the second time unit is in the time period B, the terminal device does not need to maintain the power consistency or the phase continuity between the first physical uplink channel and the second physical uplink channel.

In this manner, the network device may indirectly indicate, by using the at least one time period, the terminal device whether to maintain the power consistency and the phase continuity between the first physical uplink channel and the second physical uplink channel. In this way, the network device does not need to send indication information for each group of first time units and second time units, to reduce signaling overheads and save transmission resources.

When the terminal device maintains the power consistency and the phase continuity between the first physical uplink channel and the second physical uplink channel, the network device may perform joint processing, for example, joint channel estimation, on a DMRS for the first physical uplink channel and the second physical uplink channel. When the terminal device does not maintain the power consistency or the phase continuity between the first physical uplink channel and the second physical uplink channel, the network device may not perform joint processing, for example, joint channel estimation, on a DMRS for the first physical uplink channel and the second physical uplink channel. Therefore, the second indication information may also indicate whether the network device performs joint processing on the DMRS for the first physical uplink channel and the second physical uplink channel.

Optionally, the network device may send, to the terminal device, DCI, an RRC message, or a media access control control element (media access control control element, MAC CE) that includes the second indication information. In other words, the second indication information may be carried in the DCI, the RRC message, or the MAC CE.

In addition, the first indication information and the second indication information may be carried in a same message, or may be carried in different messages. The message herein may be understood as DCI, RRC, or a MAC CE. For example, when the first indication information and the second indication information are carried in same DCI, one piece of DCI may carry both the first indication information and the second indication information.

An execution sequence of S601 and S602 is not limited in the present invention.

S603: The terminal device sends the first physical uplink channel in the first time unit and sends the second physical uplink channel in the second time unit based on the first indication information and the second indication information. Correspondingly, the network device receives the first physical uplink channel in the first time unit and receives the second physical uplink channel in the second time unit.

In some possible manners, the second indication information indicates the terminal device not to maintain the power consistency or the phase continuity between the first physical uplink channel and the second physical uplink channel. In this case, before sending the first physical uplink channel in the first time unit and sending the second physical uplink channel in the second time unit, the terminal device determines that the power consistency and the phase continuity do not need to be maintained between the first physical uplink channel and the second physical uplink channel. Correspondingly, the network device determines not to perform joint processing, for example, joint channel estimation, on the DMRS for the first physical uplink channel and the second physical uplink channel. Therefore, after receiving the first physical uplink channel and the second physical uplink channel, the network device does not perform joint processing on the DMRS for the first physical uplink channel and the second physical uplink channel, that is, may perform separate channel estimation.

For example, as shown in FIG. 7A, the first physical uplink channel is the PUSCH repetition 1, and the second physical uplink channel is the PUSCH repetition 0. When the second indication information indicates the terminal device not to maintain the power consistency or the phase continuity between the first physical uplink channel and the second physical uplink channel, the terminal device determines that the power consistency and the phase continuity do not need to be maintained between the PUSCH repetition 1 and the PUSCH repetition 0, and the network device determines not to perform joint processing on the DMRS for the PUSCH repetition 1 and the PUSCH repetition 0. In this way, the terminal device sends the PUSCH repetition 0 in the full-duplex slot and sends the PUSCH repetition 1 in the UL slot. After receiving the PUSCH repetition 0 and the PUSCH repetition 1, the network device does not perform joint processing on the DMRS for the PUSCH repetition 0 and the PUSCH repetition 1.

For another example, as shown in FIG. 7C, the first physical uplink channel includes the PUSCH repetition 1, and the second physical uplink channel is the PUSCH repetition 0. When the second indication information indicates the terminal device not to maintain the power consistency or the phase continuity between the first physical uplink channel and the second physical uplink channel, the terminal device determines that the power consistency and the phase continuity do not need to be maintained between the PUSCH repetition 1 and the PUSCH repetition 0, and the network device determines not to perform joint processing on the DMRS for the PUSCH repetition 1 and the PUSCH repetition 0. In this way, the terminal device sends the PUSCH repetition 0 in the full-duplex slot and sends the PUSCH repetition 1 in the flexible slot. After receiving the PUSCH repetition 0 and the PUSCH repetition 1, the network device does not perform joint processing on the DMRS for the PUSCH repetition 0 and the PUSCH repetition 1. Optionally, in this example, the terminal device may maintain the power consistency and the phase continuity between the PUSCH repetition 1 and the PUSCH repetition 2, and the network device may perform joint processing on the DMRS for the PUSCH repetition 1 and the PUSCH repetition 2.

For still another example, as shown in FIG. 7D, the first physical uplink channel includes the PUSCH repetition 2, and the second physical uplink channel is the PUSCH repetition 1. When the second indication information indicates the terminal device not to maintain the power consistency or the phase continuity between the first physical uplink channel and the second physical uplink channel, the terminal device determines that the power consistency and the phase continuity do not need to be maintained between the PUSCH repetition 2 and the PUSCH repetition 1, and the network device determines not to perform joint processing on the DMRS for the PUSCH repetition 2 and the PUSCH repetition 1. In this way, the terminal device sends the PUSCH repetition 1 in the flexible slot and sends the PUSCH repetition 2 in the UL slot. After receiving the PUSCH repetition 1 and the PUSCH repetition 2, the network device does not perform joint processing on the DMRS for the PUSCH repetition 1 and the PUSCH repetition 2. Optionally, in this example, the terminal device may maintain the power consistency and the phase continuity between the PUSCH repetition 0 and the PUSCH repetition 1, and the network device may perform joint processing on the DMRS for the PUSCH repetition 0 and the PUSCH repetition 1.

In this manner, the terminal device determines, based on an indication of the network device, that the power consistency and the phase continuity do not need to be maintained between the first physical uplink channel and the second physical uplink channel. In this way, the terminal device does not need to maintain the power consistency or the phase continuity between the first physical uplink channel and the second physical uplink channel when the network device receives the first physical uplink channel and the second physical uplink channel through different antennas, thereby improving repeated transmission performance.

In some other possible manners, the second indication information indicates the terminal device to maintain the power consistency and the phase continuity between the first physical uplink channel and the second physical uplink channel. However, a bandwidth of the first physical uplink channel is different from a bandwidth of the second physical uplink channel. In this case, before sending the first physical uplink channel in the first time unit and sending the second physical uplink channel in the second time unit, the terminal device determines that the power consistency and the phase continuity do not need to be maintained between the first physical uplink channel and the second physical uplink channel. Correspondingly, the network device determines not to perform joint processing on the DMRS for the first physical uplink channel and the second physical uplink channel. Therefore, after receiving the first physical uplink channel and the second physical uplink channel, the network device does not perform joint processing on the DMRS for the first physical uplink channel and the second physical uplink channel, that is, may perform separate channel estimation.

For example, as shown in FIG. 7F, the first time unit is the UL slot, and the second time unit is the full-duplex slot. The first physical uplink channel is the PUSCH repetition 0, and the second physical uplink channel is the PUSCH repetition 1. Because a bandwidth of a UL resource in the full-duplex slot is less than the bandwidth of the PUSCH repetition 0, the bandwidth of the PUSCH repetition 0 is different from the bandwidth of the PUSCH repetition 1. In this case, even if the second indication information indicates the terminal device to maintain the power consistency and the phase continuity between the first physical uplink channel and the second physical uplink channel, the terminal device still determines that the power consistency and the phase continuity do not need to be maintained between the PUSCH repetition 0 and the PUSCH repetition 1, and the network device also determines not to perform joint processing on the DMRS for the PUSCH repetition 0 and the PUSCH repetition 1.

When the bandwidth of the first physical uplink channel is different from the bandwidth of the second physical uplink channel, it is more difficult for the network device to perform joint processing, and complexity is increased. In this manner, when the bandwidth of the first physical uplink channel is different from the bandwidth of the second physical uplink channel, the network device determines not to perform joint processing on the DMRS for the first physical uplink channel and the second physical uplink channel, so that channel estimation complexity can be reduced.

In addition, when the bandwidth of the first physical uplink channel is different from the bandwidth of the second physical uplink channel, transmit power of the terminal device may also need to be changed. Therefore, in this manner, when the bandwidth of the first physical uplink channel is different from the bandwidth of the second physical uplink channel, the terminal device determines that the power consistency and the phase continuity do not need to be maintained between the first physical uplink channel and the second physical uplink channel, so that the transmit power can be adjusted as required, thereby improving uplink transmission performance.

It should be understood that the power consistency and the phase continuity need to be maintained in an actual (actual) time domain window (time domain window, TDW). A location of the actual time domain window is related to an event (event) that causes the terminal device to fail to maintain the power consistency and the phase continuity. For example, if an event (for example, frequency hopping) causes the terminal device to fail to maintain the power consistency and the phase continuity, an end symbol of the actual time domain window is a last symbol of a physical uplink channel before the event. Therefore, when the second indication information indicates the terminal device to maintain the power consistency and the phase continuity between the first physical uplink channel and the second physical uplink channel, if the first physical uplink channel and the second physical uplink channel are located in a same actual time domain window, the terminal device maintains the power consistency and the phase continuity between the first physical uplink channel and the second physical uplink channel. When the second indication information indicates the terminal device not to maintain the power consistency or the phase continuity between the first physical uplink channel and the second physical uplink channel, the terminal device does not need to maintain the power consistency or the phase consistency between the first physical uplink channel and the second physical uplink channel. In this way, the event that causes the terminal device to fail to maintain the power consistency and the phase continuity may include: The second indication information indicates the terminal device not to maintain the power consistency or the phase continuity between the first physical uplink channel and the second physical uplink channel. For example, there are two consecutive times of overlapping transmission or two times of adjacent repeated transmission. If the two times of transmission are performed in different time units, for example, one time of transmission is performed in the first time unit, and the other time of transmission is performed in the second time unit, and the second indication information indicates the terminal device not to maintain the power consistency or the phase continuity between the first physical uplink channel and the second physical uplink channel, an event that causes the terminal device to fail to maintain the power consistency and the phase continuity may occur, and the location of the actual time domain window is affected. In other words, an end symbol of the actual time domain window is a last symbol of a physical uplink channel before the event. In this way, it can be ensured that the physical uplink channel (for example, the first physical uplink channel) before the event is in one actual time domain window, and a physical uplink channel (for example, the second physical uplink channel) after the event is in another actual time domain window. That is, it may be understood that the event occurs between the first physical uplink channel and the second physical uplink channel.

According to the method shown in FIG. 6, the terminal device may determine, based on the indication of the network device, whether to maintain the power consistency and the phase continuity between the first physical uplink channel and the second physical uplink channel, so that the terminal device does not need to maintain the power consistency or the phase continuity between the first physical uplink channel and the second physical uplink channel when the network device receives the first physical uplink channel and the second physical uplink channel through different antennas. In this way, the terminal device may adjust the transmit power as required, thereby improving repeated transmission performance.

To improve the repeated transmission performance, an embodiment of this application provides another communication method. The method may be applied to the communication system shown in FIG. 1. The following specifically describes a procedure of the method with reference to a flowchart shown in FIG. 9.

S901: A network device sends first indication information to a terminal device. Correspondingly, the terminal device receives the first indication information from the network device.

The first indication information may indicate the terminal device to separately send first uplink information in a first time unit and a second time unit. The first time unit is a time unit used only for uplink transmission, and the second time unit is a time unit capable of being used for uplink transmission and downlink transmission.

For specific content of S901, refer to S601. Details are not described herein again.

S902: The terminal device determines that power consistency and phase continuity do not need to be maintained between a first physical uplink channel and a second physical uplink channel.

The first physical uplink channel is a channel that is in the first time unit and that is used to carry the first uplink information, and the second physical uplink channel is a channel that is in the second time unit and that is used to carry the first uplink information. For specific content of the first physical uplink channel and the second physical uplink channel, respectively refer to descriptions of the first physical uplink channel and the second physical uplink channel in S602. Details are not described herein again.

In some possible manners, it may be agreed on in a protocol that the power consistency and the phase continuity do not need to be maintained between the first physical uplink channel and the second physical uplink channel. In this way, after receiving the first indication information, the terminal device may determine that the power consistency and the phase continuity do not need to be maintained between the first physical uplink channel and the second physical uplink channel.

Optionally, after determining that the power consistency and the phase continuity do not need to be maintained between the first physical uplink channel and the second physical uplink channel, the terminal device may send the first physical uplink channel in the first time unit and send the second physical uplink channel in the second time unit.

For example, as shown in FIG. 7A, the first physical uplink channel is the PUSCH repetition 1, and the second physical uplink channel is the PUSCH repetition 0. The terminal device determines that the power consistency and the phase continuity do not need to be maintained between the PUSCH repetition 1 and the PUSCH repetition 0, and sends the PUSCH repetition 0 in the full-duplex slot and sends the PUSCH repetition 1 in the UL slot.

For another example, as shown in FIG. 7C, the first physical uplink channel includes the PUSCH repetition 1, and the second physical uplink channel is the PUSCH repetition 0. The terminal device determines that the power consistency and the phase continuity do not need to be maintained between the PUSCH repetition 1 and the PUSCH repetition 0, and sends the PUSCH repetition 0 in the full-duplex slot and sends the PUSCH repetition 1 in the flexible slot. Optionally, in this example, the terminal device may maintain the power consistency and the phase continuity between the PUSCH repetition 1 and the PUSCH repetition 2.

For still another example, as shown in FIG. 7D, the first physical uplink channel includes the PUSCH repetition 2, and the second physical uplink channel is the PUSCH repetition 1. The terminal device determines that the power consistency and the phase continuity do not need to be maintained between the PUSCH repetition 2 and the PUSCH repetition 1, and sends the PUSCH repetition 1 in the flexible slot and sends the PUSCH repetition 2 in the UL slot. Optionally, in this example, the terminal device may maintain the power consistency and the phase continuity between the PUSCH repetition 0 and the PUSCH repetition 1.

S903: The network device determines not to perform joint processing on a DMRS for the first physical uplink channel and the second physical uplink channel. In this way, after receiving the first physical uplink channel and the second physical uplink channel that are from the terminal device, the network device may not perform joint processing on the DMRS for the first physical uplink channel and the second physical uplink channel.

In some possible manners, it may be agreed on in a protocol that joint processing is not performed on the DMRS for the first physical uplink channel and the second physical uplink channel. In this way, the network device may determine that joint processing does not need to be performed on the DMRS between the first physical uplink channel and the second physical uplink channel.

For example, as shown in FIG. 7A, the first physical uplink channel is the PUSCH repetition 1, and the second physical uplink channel is the PUSCH repetition 0. The network device determines that joint processing does not need to be performed on the DMRS for the PUSCH repetition 1 and the PUSCH repetition 0. In this way, after receiving the PUSCH repetition 0 and the PUSCH repetition 1, the network device does not need to perform joint processing on the DMRS for the PUSCH repetition 0 and the PUSCH repetition 1, that is, may perform separate channel estimation.

For another example, as shown in FIG. 7C, the first physical uplink channel includes the PUSCH repetition 1, and the second physical uplink channel is the PUSCH repetition 0. The network device determines that joint processing does not need to be performed on the DMRS for the PUSCH repetition 1 and the PUSCH repetition 0. In this way, after receiving the PUSCH repetition 0 and the PUSCH repetition 1, the network device does not perform joint processing on the DMRS for the PUSCH repetition 0 and the PUSCH repetition 1. Optionally, in this example, the network device may perform joint processing on the DMRS for the PUSCH repetition 1 and the PUSCH repetition 2.

For still another example, as shown in FIG. 7D, the first physical uplink channel includes the PUSCH repetition 2, and the second physical uplink channel is the PUSCH repetition 1. The network device determines not to perform joint processing on the DMRS for the PUSCH repetition 2 and the PUSCH repetition 1. In this way, after receiving the PUSCH repetition 1 and the PUSCH repetition 2, the network device does not perform joint processing on the DMRS for the PUSCH repetition 2 and the PUSCH repetition 1. Optionally, in this example, the network device may perform joint processing on the DMRS for the PUSCH repetition 0 and the PUSCH repetition 1.

It should be understood that, in this case, an event that causes the terminal device to fail to maintain the power consistency and the phase continuity may include: One of the first physical uplink channel and the second physical uplink channel is in the first time unit, and the other is in the second time unit. In other words, if one of the first physical uplink channel and the second physical uplink channel is in the first time unit, and the other is in the second time unit, the event that causes the terminal device to fail to maintain the power consistency and the phase continuity may occur, and a location of an actual time domain window is affected. In other words, an end symbol of the actual time domain window is a last symbol of a physical uplink channel before the event. In this way, it can be ensured that the physical uplink channel (for example, the first physical uplink channel) before the event is in one actual time domain window, and a physical uplink channel (for example, the second physical uplink channel) after the event is in another actual time domain window. That is, it may be understood that the event occurs between the first physical uplink channel and the second physical uplink channel.

According to the method shown in FIG. 9, if the terminal device separately sends the first uplink information in the first time unit used only for uplink transmission and the second time unit capable of being used for uplink transmission and downlink transmission, it may be considered by default that the power consistency and the phase continuity do not need to be maintained between the first physical uplink channel and the second physical uplink channel, and the network device does not need to perform joint processing on the DMRS for the first physical uplink channel and the second physical uplink channel. In this way, the terminal device may adjust transmit power as required, thereby improving repeated transmission performance.

Based on a same technical concept as the method embodiments in FIG. 6 to FIG. 9, an embodiment of this application provides a communication apparatus in FIG. 10. The communication apparatus may be configured to perform functions of related steps in the foregoing method embodiments. The functions may be implemented by hardware, or may be implemented by software or by hardware executing corresponding software. The hardware or the software includes one or more modules corresponding to the foregoing functions. A structure of the communication apparatus is shown in FIG. 10, and includes a communication unit 1001 and a processing unit 1002. The communication apparatus 1000 may be used in the network device or the terminal device in the communication system shown in FIG. 1, and may implement the communication method provided in the foregoing embodiments and examples of this application. Functions of the units in the communication apparatus 1000 are described below.

The communication unit 1001 is configured to receive and send data. The communication unit 1001 may be implemented by using a transceiver, for example, a mobile communication module. The mobile communication module may include at least one antenna, at least one filter, a switch, a power amplifier, a low noise amplifier (low noise amplifier, LNA), and the like.

The processing unit 1002 may be configured to support the communication apparatus 1000 in performing processing actions in the foregoing method embodiments. The processing unit 1002 may be implemented by using a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

In an implementation, the communication apparatus 1000 is used in the terminal device in the embodiment of this application shown in FIG. 6. A specific function of the processing unit 1002 in this implementation is described below.

The processing unit 1002 is configured to: receive first indication information from the network device by using the communication unit 1001, where the first indication information indicates the terminal device to separately send first uplink information in a first time unit and a second time unit, the first time unit is a time unit used only for uplink transmission, and the second time unit is a time unit capable of being used for uplink transmission and downlink transmission; receive second indication information from the network device by using the communication unit 1001, where the second indication information indicates the terminal device whether to maintain power consistency and phase continuity between a first physical uplink channel and a second physical uplink channel, the first physical uplink channel is a channel that is in the first time unit and that is used to carry the first uplink information, and the second physical uplink channel is a channel that is in the second time unit and that is used to carry the first uplink information; and send the first physical uplink channel in the first time unit and send the second physical uplink channel in the second time unit based on the first indication information and the second indication information by using the communication unit 1001.

In an example, before sending the first physical uplink channel in the first time unit and sending the second physical uplink channel in the second time unit, the processing unit 1002 is further configured to: when the second indication information indicates the terminal device not to maintain the power consistency or the phase continuity between the first physical uplink channel and the second physical uplink channel, determine that the power consistency and the phase continuity do not need to be maintained between the first physical uplink channel and the second physical uplink channel.

In another example, before sending the first physical uplink channel in the first time unit and sending the second physical uplink channel in the second time unit, the processing unit 1002 is further configured to: when the second indication information indicates the terminal device to maintain the power consistency and the phase continuity between the first physical uplink channel and the second physical uplink channel, and a bandwidth of the first physical uplink channel is different from a bandwidth of the second physical uplink channel, determine that the power consistency and the phase continuity do not need to be maintained between the first physical uplink channel and the second physical uplink channel.

In some possible manners, the processing unit 1002 is specifically configured to receive, from the network device by using the communication unit 1001, DCI, an RRC message, or a MAC CE that includes the second indication information.

Optionally, the second indication information includes information indicating at least one time period. When the first time unit and the second time unit belong to a same time period in the at least one time period, the second indication information indicates the terminal device to maintain the power consistency and the phase continuity between the first physical uplink channel and the second physical uplink channel. When the first time unit and the second time unit do not belong to a same time period in the at least one time period, the second indication information indicates the terminal device not to maintain the power consistency or the phase continuity between the first physical uplink channel and the second physical uplink channel.

Optionally, the first time unit includes an uplink time unit and/or a flexible time unit, and the second time unit includes a full-duplex time unit; the first time unit includes an uplink time unit, and the second time unit includes a full-duplex time unit and a flexible time unit; or the first time unit includes an uplink time unit, and the second time unit includes a flexible time unit.

In another implementation, the communication apparatus 1000 is used in the network device in the embodiment of this application shown in FIG. 6. A specific function of the processing unit 1002 in this implementation is described below.

The processing unit 1002 is configured to: send first indication information to the terminal device by using the communication unit 1001, where the first indication information indicates the terminal device to separately send first uplink information in a first time unit and a second time unit, the first time unit is a time unit used only for uplink transmission, and the second time unit is a time unit capable of being used for uplink transmission and downlink transmission; send second indication information to the terminal device by using the communication unit 1001, where the second indication information indicates the terminal device whether to maintain power consistency and phase continuity between a first physical uplink channel and a second physical uplink channel, the first physical uplink channel is a channel that is in the first time unit and that is used to carry the first uplink information, and the second physical uplink channel is a channel that is in the second time unit and that is used to carry the first uplink information; and receive the first physical uplink channel in the first time unit and receive the second physical uplink channel in the second time unit by using the communication unit 1001.

In an example, the processing unit 1002 is further configured to: when the second indication information indicates the terminal device not to maintain the power consistency or the phase continuity between the first physical uplink channel and the second physical uplink channel, determine that joint processing does not need to be performed on a DMRS for the first physical uplink channel and the second physical uplink channel.

In another example, the processing unit 1002 is further configured to: when the second indication information indicates the terminal device to maintain the power consistency and the phase continuity between the first physical uplink channel and the second physical uplink channel, and a bandwidth of the first physical uplink channel is different from a bandwidth of the second physical uplink channel, determine that joint processing does not need to be performed on the DMRS for the first physical uplink channel and the second physical uplink channel.

In some possible manners, the processing unit 1002 is specifically configured to send, to the terminal device by using the communication unit 1001, DCI, an RRC message, or a MAC CE that includes the second indication information.

Optionally, the second indication information includes information indicating at least one time period. When the first time unit and the second time unit belong to a same time period in the at least one time period, the second indication information indicates the terminal device to maintain the power consistency and the phase continuity between the first physical uplink channel and the second physical uplink channel. When the first time unit and the second time unit do not belong to a same time period in the at least one time period, the second indication information indicates the terminal device not to maintain the power consistency or the phase continuity between the first physical uplink channel and the second physical uplink channel.

Optionally, the first time unit includes an uplink time unit and/or a flexible time unit, and the second time unit includes a full-duplex time unit; the first time unit includes an uplink time unit, and the second time unit includes a full-duplex time unit and a flexible time unit; or the first time unit includes an uplink time unit, and the second time unit includes a flexible time unit.

In still another implementation, the communication apparatus 1000 is used in the terminal device in the embodiment of this application shown in FIG. 9. A specific function of the processing unit 1002 in this implementation is described below.

The processing unit 1002 is configured to: receive first indication information from the network device by using the communication unit 1001, where the first indication information indicates the terminal device to separately send first uplink information in a first time unit and a second time unit, the first time unit is a time unit used only for uplink transmission, and the second time unit is a time unit capable of being used for uplink transmission and downlink transmission; and determine that power consistency and phase continuity do not need to be maintained between a first physical uplink channel and a second physical uplink channel, where the first physical uplink channel is a channel that is in the first time unit and that is used to carry the first uplink information, and the second physical uplink channel is a channel that is in the second time unit and that is used to carry the first uplink information.

For example, the first time unit includes an uplink time unit and/or a flexible time unit, and the second time unit includes a full-duplex time unit; the first time unit includes an uplink time unit, and the second time unit includes a full-duplex time unit and a flexible time unit; or the first time unit includes an uplink time unit, and the second time unit includes a flexible time unit.

In yet another implementation, the communication apparatus 1000 is used in the network device in the embodiment of this application shown in FIG. 9. A specific function of the processing unit 1002 in this implementation is described below.

The processing unit 1002 is configured to: send first indication information to the terminal device by using the communication unit 1001, where the first indication information indicates the terminal device to separately send first uplink information in a first time unit and a second time unit, the first time unit is a time unit used for uplink transmission, and the second time unit is a time unit capable of being used for uplink transmission and downlink transmission; and determine that joint processing does not need to be performed on a DMRS for a first physical uplink channel and a second physical uplink channel, where the first physical uplink channel is a channel that is in the first time unit and that is used to carry the first uplink information, and the second physical uplink channel is a channel that is in the second time unit and that is used to carry the first uplink information.

For example, the first time unit includes an uplink time unit and/or a flexible time unit, and the second time unit includes a full-duplex time unit; the first time unit includes an uplink time unit, and the second time unit includes a full-duplex time unit and a flexible time unit; or the first time unit includes an uplink time unit, and the second time unit includes a flexible time unit.

It should be noted that, in the foregoing embodiment of this application, division into the modules is an example, is merely logical function division, and may be other division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

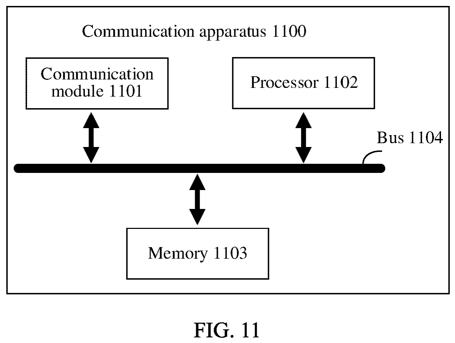

Based on a same technical concept, an embodiment of this application provides a communication apparatus shown in FIG. 11. The communication apparatus may be configured to perform related steps in the foregoing method embodiments. The communication apparatus may be used in the network device or the terminal device in the communication system shown in FIG. 1, may implement the communication method provided in the foregoing embodiments and examples of this application, and has functions of the communication apparatus shown in FIG. 10. Refer to FIG. 11. The communication apparatus 1100 includes a communication module 1101, a processor 1102, and a memory 1103. The communication module 1101, the processor 1102, and the memory 1103 are connected to each other.

Optionally, the communication module 1101, the processor 1102, and the memory 1103 are connected to each other through a bus 1104. The bus 1104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 11, but this does not mean that there is only one bus or only one type of bus.

The communication module 1101 is configured to receive and send data, to implement communication and interaction with another device. For example, the communication module 1101 may be implemented through a physical interface, a communication module, a communication interface, or an input/output interface.

The processor 1102 may be configured to support the communication apparatus 1100 in performing processing actions in the foregoing method embodiments. When the communication apparatus 1100 is configured to implement the foregoing method embodiments, the processor 1102 may be further configured to implement functions of the processing unit 1002. The processor 1102 may be a CPU, or may be another general-purpose processor, a DSP, an ASIC, an FPGA or another programmable logic device, a transistor logic device, a hardware component, or any combination thereof. The general-purpose processor may be a microprocessor or any regular processor.

In an implementation, the communication apparatus 1100 is used in the terminal device in the embodiment of this application shown in FIG. 6. The processor 1102 is specifically configured to: receive first indication information from the network device by using the communication module 1101, where the first indication information indicates the terminal device to separately send first uplink information in a first time unit and a second time unit, the first time unit is a time unit used only for uplink transmission, and the second time unit is a time unit capable of being used for uplink transmission and downlink transmission; receive second indication information from the network device by using the communication module 1101, where the second indication information indicates the terminal device whether to maintain power consistency and phase continuity between a first physical uplink channel and a second physical uplink channel, the first physical uplink channel is a channel that is in the first time unit and that is used to carry the first uplink information, and the second physical uplink channel is a channel that is in the second time unit and that is used to carry the first uplink information; and send the first physical uplink channel in the first time unit and send the second physical uplink channel in the second time unit based on the first indication information and the second indication information by using the communication module 1101.

In another implementation, the communication apparatus 1100 is used in the network device in the embodiment of this application shown in FIG. 6. The processor 1102 is specifically configured to: send first indication information to the terminal device by using the communication module 1101, where the first indication information indicates the terminal device to separately send first uplink information in a first time unit and a second time unit, the first time unit is a time unit used only for uplink transmission, and the second time unit is a time unit capable of being used for uplink transmission and downlink transmission; send second indication information to the terminal device by using the communication module 1101, where the second indication information indicates the terminal device whether to maintain power consistency and phase continuity between a first physical uplink channel and a second physical uplink channel, the first physical uplink channel is a channel that is in the first time unit and that is used to carry the first uplink information, and the second physical uplink channel is a channel that is in the second time unit and that is used to carry the first uplink information; and receive the first physical uplink channel in the first time unit and receive the second physical uplink channel in the second time unit by using the communication module 1101.

In still another implementation, the communication apparatus 1100 is used in the terminal device in the embodiment of this application shown in FIG. 9. The processor 1102 is specifically configured to: receive first indication information from the network device by using the communication module 1101, where the first indication information indicates the terminal device to separately send first uplink information in a first time unit and a second time unit, the first time unit is a time unit used only for uplink transmission, and the second time unit is a time unit capable of being used for uplink transmission and downlink transmission; and determine that power consistency and phase continuity do not need to be maintained between a first physical uplink channel and a second physical uplink channel, where the first physical uplink channel is a channel that is in the first time unit and that is used to carry the first uplink information, and the second physical uplink channel is a channel that is in the second time unit and that is used to carry the first uplink information.

In yet another implementation, the communication apparatus 1100 is used in the network device in the embodiment of this application shown in FIG. 9. The processor 1102 is specifically configured to: send first indication information to the terminal device by using the communication module 1101, where the first indication information indicates the terminal device to separately send first uplink information in a first time unit and a second time unit, the first time unit is a time unit used for uplink transmission, and the second time unit is a time unit capable of being used for uplink transmission and downlink transmission; and determine that joint processing does not need to be performed on a DMRS for a first physical uplink channel and a second physical uplink channel, where the first physical uplink channel is a channel that is in the first time unit and that is used to carry the first uplink information, and the second physical uplink channel is a channel that is in the second time unit and that is used to carry the first uplink information.

For specific functions of the processor 1102, refer to the descriptions of the communication method provided in the foregoing embodiments and examples of this application, and the descriptions of specific functions of the communication apparatus 1000 in the embodiment of this application shown in FIG. 10. Details are not described herein again.

The memory 1103 is configured to store program instructions, data, and the like. Specifically, the program instructions may include program code, and the program code includes computer operation instructions. The memory 1103 may include a RAM, and may further include a non-volatile memory (non-volatile memory), for example, at least one magnetic disk memory. The processor 1102 executes the program instructions stored in the memory 1103, and uses the data stored in the memory 1103 to implement the foregoing functions, to implement the communication method provided in the foregoing embodiments of this application.

It may be understood that the memory 1103 in FIG. 11 in this application may be a volatile memory or a non-volatile memory, or may include a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and is used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the system and method described in this specification includes but is not limited to these and any memory of another proper type.

Based on the foregoing embodiments, an embodiment of this application further provides a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM or another compact disc storage, a magnetic disk storage medium or another magnetic storage device, or any other medium that can be used to carry or store expected program code in a form of an instruction or a data structure and that can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete component.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A communication method, applied to a terminal device or a chip in the terminal device, and comprising:
receiving first indication information from a network device, wherein the first indication information indicates the terminal device to separately send first uplink information in a first time unit and a second time unit, the first time unit is a time unit used only for uplink transmission, and the second time unit is a time unit capable of being used for uplink transmission and downlink transmission;
receiving second indication information from the network device, wherein the second indication information indicates the terminal device whether to maintain power consistency and phase continuity between a first physical uplink channel and a second physical uplink channel, the first physical uplink channel is a channel that is in the first time unit and that is used to carry the first uplink information, and the second physical uplink channel is a channel that is in the second time unit and that is used to carry the first uplink information; and
sending the first physical uplink channel in the first time unit and sending the second physical uplink channel in the second time unit based on the first indication information and the second indication information.

2. The method according to claim 1, wherein before sending the first physical uplink channel in the first time unit and sending the second physical uplink channel in the second time unit, the method further comprises:
when the second indication information indicates the terminal device not to maintain the power consistency or the phase continuity between the first physical uplink channel and the second physical uplink channel, determining that the power consistency and the phase continuity do not need to be maintained between the first physical uplink channel and the second physical uplink channel.

3. The method according to claim 1 or 2, wherein before sending the first physical uplink channel in the first time unit and sending the second physical uplink channel in the second time unit, the method further comprises:
when the second indication information indicates the terminal device to maintain the power consistency and the phase continuity between the first physical uplink channel and the second physical uplink channel, and a bandwidth of the first physical uplink channel is different from a bandwidth of the second physical uplink channel, determining that the power consistency and the phase continuity do not need to be maintained between the first physical uplink channel and the second physical uplink channel.

4. The method according to any one of claims 1 to 3, wherein receiving the second indication information from the network device comprises:
receiving, from the network device, downlink control information DCI, a radio resource control RRC message, or a media access control control element MAC CE that comprises the second indication information.

5. The method according to any one of claims 1 to 4, wherein the second indication information comprises information indicating at least one time period;
when the first time unit and the second time unit belong to a same time period in the at least one time period, the second indication information indicates the terminal device to maintain the power consistency and the phase continuity between the first physical uplink channel and the second physical uplink channel; and
when the first time unit and the second time unit do not belong to a same time period in the at least one time period, the second indication information indicates the terminal device not to maintain the power consistency or the phase continuity between the first physical uplink channel and the second physical uplink channel.

6. The method according to any one of claims 1 to 5, wherein the first time unit comprises an uplink time unit and/or a flexible time unit, and the second time unit comprises a full-duplex time unit;
the first time unit comprises an uplink time unit, and the second time unit comprises a full-duplex time unit and a flexible time unit; or
the first time unit comprises an uplink time unit, and the second time unit comprises a flexible time unit.

7. A communication method, applied to a network device or a chip in the network device, and comprising:
sending first indication information to a terminal device, wherein the first indication information indicates the terminal device to separately send first uplink information in a first time unit and a second time unit, the first time unit is a time unit used only for uplink transmission, and the second time unit is a time unit capable of being used for uplink transmission and downlink transmission;
sending second indication information to the terminal device, wherein the second indication information indicates the terminal device whether to maintain power consistency and phase continuity between a first physical uplink channel and a second physical uplink channel, the first physical uplink channel is a channel that is in the first time unit and that is used to carry the first uplink information, and the second physical uplink channel is a channel that is in the second time unit and that is used to carry the first uplink information; and
receiving the first physical uplink channel in the first time unit and receiving the second physical uplink channel in the second time unit.

8. The method according to claim 7, further comprising:
when the second indication information indicates the terminal device not to maintain the power consistency or the phase continuity between the first physical uplink channel and the second physical uplink channel, determining that joint processing does not need to be performed on a demodulation reference signal DMRS for the first physical uplink channel and the second physical uplink channel.

9. The method according to claim 7 or 8, further comprising:
when the second indication information indicates the terminal device to maintain the power consistency and the phase continuity between the first physical uplink channel and the second physical uplink channel, and a bandwidth of the first physical uplink channel is different from a bandwidth of the second physical uplink channel, determining that joint processing does not need to be performed on the DMRS for the first physical uplink channel and the second physical uplink channel.

10. The method according to any one of claims 7 to 9, wherein sending the second indication information to the terminal device comprises:
sending, to the terminal device, downlink control information DCI, a radio resource control RRC message, or a media access control control element MAC CE that comprises the second indication information.

11. The method according to any one of claims 7 to 10, wherein the second indication information comprises information indicating at least one time period;
when the first time unit and the second time unit belong to a same time period in the at least one time period, the second indication information indicates the terminal device to maintain the power consistency and the phase continuity between the first physical uplink channel and the second physical uplink channel; and
when the first time unit and the second time unit do not belong to a same time period in the at least one time period, the second indication information indicates the terminal device not to maintain the power consistency or the phase continuity between the first physical uplink channel and the second physical uplink channel.

12. The method according to any one of claims 7 to 11, wherein the first time unit comprises an uplink time unit and/or a flexible time unit, and the second time unit comprises a full-duplex time unit;
the first time unit comprises an uplink time unit, and the second time unit comprises a full-duplex time unit and a flexible time unit; or
the first time unit comprises an uplink time unit, and the second time unit comprises a flexible time unit.

13. A communication method, applied to a terminal device or a chip in the terminal device, and comprising:
receiving first indication information from a network device, wherein the first indication information indicates the terminal device to separately send first uplink information in a first time unit and a second time unit, the first time unit is a time unit used only for uplink transmission, and the second time unit is a time unit capable of being used for uplink transmission and downlink transmission; and
determining that power consistency and phase continuity do not need to be maintained between a first physical uplink channel and a second physical uplink channel, wherein the first physical uplink channel is a channel that is in the first time unit and that is used to carry the first uplink information, and the second physical uplink channel is a channel that is in the second time unit and that is used to carry the first uplink information.

14. The method according to claim 13, wherein the first time unit comprises an uplink time unit and/or a flexible time unit, and the second time unit comprises a full-duplex time unit;
the first time unit comprises an uplink time unit, and the second time unit comprises a full-duplex time unit and a flexible time unit; or
the first time unit comprises an uplink time unit, and the second time unit comprises a flexible time unit.

15. A communication method, applied to a network device or a chip in the network device, and comprising:
sending first indication information to a terminal device, wherein the first indication information indicates the terminal device to separately send first uplink information in a first time unit and a second time unit, the first time unit is a time unit used for uplink transmission, and the second time unit is a time unit capable of being used for uplink transmission and downlink transmission; and
determining that joint processing does not need to be performed on a demodulation reference signal DMRS for a first physical uplink channel and a second physical uplink channel, wherein the first physical uplink channel is a channel that is in the first time unit and that is used to carry the first uplink information, and the second physical uplink channel is a channel that is in the second time unit and that is used to carry the first uplink information.

16. The method according to claim 15, wherein the first time unit comprises an uplink time unit and/or a flexible time unit, and the second time unit comprises a full-duplex time unit;
the first time unit comprises an uplink time unit, and the second time unit comprises a full-duplex time unit and a flexible time unit; or
the first time unit comprises an uplink time unit, and the second time unit comprises a flexible time unit.

17. A communication apparatus, comprising:
a communication unit, configured to receive and send data; and
a processing unit, configured to perform the method according to any one of claims 1 to 16 by using the communication unit.

18. A communication system, comprising:
a terminal device, configured to implement the method according to any one of claims 1 to 6; and
a network device, configured to implement the method according to any one of claims 7 to 12.

19. A communication system, comprising:
a terminal device, configured to implement the method according to claim 13 or 14; and
a network device, configured to implement the method according to claim 15 or 16.

20. A computer-readable storage medium, wherein the computer-readable storage medium stores a computer program, and when the computer program is run on a computer, the computer is enabled to perform the method according to any one of claims 1 to 16.

21. A chip, wherein the chip is coupled to a memory, and the chip reads a computer program stored in the memory, to perform the method according to any one of claims 1 to 16.
